# EUROPÄISCHE PATENTSCHRIFT

(11) **EP 3 840 968 B1**
(45) Veröffentlichungstag und Bekanntmachung des Hinweises auf die Patenterteilung: **26.07.2023**
(21) Anmeldenummer: 19716860.2
(22) Anmeldetag: 04.04.2019
(51) Int. Cl.: B60G 17/019, B60G 21/055, G01L 3/10

(54) **WANKSTABILISATOR**
ROLL STABILIZER
STABILISATEUR

(30) Priorität: 24.08.2018 DE 102018214345; 30.10.2018 DE 102018218598
(43) Veröffentlichungstag der Anmeldung: 30.06.2021
(73) Patentinhaber: ZF Friedrichshafen AG, 88046 Friedrichshafen (DE)
(72) Erfinder: HASKAMP, Klaus, 49413 Dinklage (DE); GOLLIN, Armin, 88697 Bermatingen (DE); ENGEL, Markus, 78234 Engen (DE); MARS, Christoph, 49401 Damme (DE)
(74) Vertreter: ZF Friedrichshafen AG
(86) Internationale Anmeldenummer: PCT/EP2019/058443
(87) Internationale Veröffentlichungsnummer: WO 2020/038613

(56) Entgegenhaltungen:
- DE-A1-102013 219 079
- DE-A1-102014 218 239
- DE-B3-102015 200 268

## Beschreibung

Die Erfindung betrifft einen Wankstabilisator für ein Kraftfahrzeug gemäß dem Oberbegriff des Patentanspruchs 1.

Aus der Kraftfahrzeugtechnik, insbesondere der Fahrwerkstechnik, ist es bekannt, Kraftfahrzeuge mit einem sogenannten Wankstabilisator auszustatten. In einfachster Ausführung handelt es sich hierbei um eine im Wesentlichen c-förmige Drehstabfeder, die im mittigen Bereich drehbar gegenüber dem Fahrzeugaufbau gelagert ist und deren äußere, sich gegenüberliegende Enden jeweils mit einer Radaufhängung gekoppelt sind. Durch diese Konstruktion sorgt der Wankstabilisator dafür, dass die Karosserie des Fahrzeugs bei einer Kurvenfahrt nicht nur an der kurvenäußeren Seite einfedert (bedingt durch die Zentrifugalkraft), sondern dass zudem das kurveninnere Rad etwas abgesenkt wird (Kopierverhalten).

Zur weiteren Steigerung der Fahrzeugstabilität sowie des Fahrkomforts ist es bekannt, Wankstabilisatoren verstellbar auszuführen. Der Wankstabilisator umfasst in diesem Fall einen Aktuator und ist in zwei mit Hilfe des Aktuators um eine Rotationsachse relativ zueinander verdrehbare Stabilisatorabschnitte geteilt. Durch die Verdrehung der Stabilisatorabschnitte zueinander wird eine Wankbewegung des Fahrzeugaufbaus gezielt erzeugt oder einer durch äußere Einflüsse hervorgerufenen Wankbewegung des Fahrzeugaufbaus gezielt entgegengewirkt. Zur bedarfsgerechten Ansteuerung des Aktuators kann es sinnvoll sein, ein zwischen den Stabilisatorabschnitten wirkendes Drehmoment zu erfassen, insbesondere um dieses beispielsweise in die Regelung des Aktuators einfließen zu lassen.

Aus der DE 10 2011 078 819 A1 ist ein aktiv verstellbarer Wankstabilisator für ein Kraftfahrzeug bekannt, zwischen dessen beiden Stabilisatorabschnitten ein Aktuator zur Verdrehung der Stabilisatorabschnitte angeordnet ist. Der Wankstabilisator weist eine nach dem Prinzip der inversen Magnetostriktion arbeitende Sensoreinrichtung zur Erfassung eines zwischen den Stabilisatorabschnitten wirkenden Drehmoments auf. Dazu ist ein magnetisch kodierter Primärsensor an einem Stabilisatorabschnitt angeordnet, wobei ein Magnetfeldsensor als Sekundärsensor vorgesehen ist, der Änderungen des magnetischen Feldes des Primärsensors in ein elektrisches Signal umwandelt. Der magnetisch kodierte Primärsensor wird durch einen Abschnitt des Stabilisatorteiles gebildet. Als nachteilig daran ist anzusehen, dass in den Stabilisatorabschnitt eine magnetische Codierung eingebracht werden muss. Als weiterer Nachteil des Messverfahrens ist anzusehen, dass die Stärke der magnetischen Codierung äußerer Fremdeinwirkung (beispielsweise mechanischen Einflüssen wie Steinschlag, Vibration oder dergleichen, oder thermischen Einflüssen) unterliegt, wodurch unter Umständen die Funktionalität der Sensoreinrichtung eingeschränkt wird.

Aus DE 10 2013 219 079 A1 ist allgemein ein Bauteil für eine Vorrichtung zur Erfassung einer in das Bauteil eingeleiteten Materialspannung bekannt. Das Bauteil weist eine Messzone mit einer permanenten Magnetisierung auf. Auf Basis des inversen magnetostriktiven Effekts erzeugt die Messzone ein von der Materialspannung abhängiges, mittels eines Sensors erfassbares Magnetfeld. Auch hier muss zunächst die Messzone mit einer Magnetisierung versehen werden; die einmal eingebrachte Magnetisierung unterliegt im betrieblichen Einsatz äußerer (Fremd-) Einwirkung.

DE 10 2014 218 239 A1 offenbart einen Wankstabilisator gemäß Merkmalen des Oberbegriffs des Anspruchs 1. Das Getriebe des Wankstabilisators weist ein Planetengetriebe auf, wobei die Sensoreinrichtung zumindest teilweise an einem Hohlrad des Planetengetriebes angeordnet ist. Es zeigt sich, dass eine Anordnung der Sensoreinrichtung am Hohlrad nachteilig ist.

Aus DE 10 2015 200 268 B3 ist eine Anordnung zum Messen eines Drehmoments an einem sich in einer Achse erstreckenden Maschinenelement bekannt. Das Maschinenelement weist zwei sich umfänglich um die Achse erstreckende Magnetisierungsbereiche auf, denen jeweils axial zueinander beabstandete Magnetfeldsensoren gegenüberstehen. Zur Erhöhung der Genauigkeit der Drehmomentmessung wird vorgeschlagen, dass zwischen den Magnetfeldsensoren jeweils ein Magnetfeldleitelement ausgebildet ist.

Es ist eine Aufgabe der vorliegenden Erfindung, einen Wankstabilisator der eingangs genannten Art anzugeben, der einfach herstellbar ist und dessen Sensoreinrichtung in verringertem Maße äußeren Einflüssen unterliegt.

Die Aufgabe wird gelöst durch einen Wankstabilisator mit den Merkmalen des Anspruchs 1. Es handelt sich hierbei um einen Wankstabilisator für ein Kraftfahrzeug, mit einer nach dem Prinzip der inversen Magnetostriktion arbeitenden Sensoreinrichtung zur Erfassung eines zwischen Stabilisatorabschnitten wirkenden Drehmoments, wobei der Wankstabilisator aktiv verstellbar ausgeführt ist und dazu einen zwischen den Stabilisatorabschnitten wirkenden Aktuator aufweist, der zur Verdrehung der Stabilisatorabschnitte gegeneinander mit jedem der Stabilisatorabschnitte antriebsverbunden ist, wobei der Aktuator ein Gehäuse aufweist, innerhalb dessen ein Antriebsmotor und ein damit antriebsverbundenes Getriebe angeordnet ist, wobei die Sensoreinrichtung eine Senderspule zur Magnetisierung eines im Betrieb auf Torsion beanspruchten Messkörpers und wenigstens eine Empfängerspule zum Erfassen des Magnetfeldes des Messkörpers aufweist. Der Wankstabilisator zeichnet sich erfindungsgemäß dadurch aus, dass
das Gehäuse des Aktuators zumindest abschnittsweise den Messkörper bildet, indem das Aktuatorgehäuse mittels der Senderspule magnetisierbar ist und das vom Aktuatorgehäuse erzeugte Magnetfeld mittels der wenigstens einen Empfängerspule erfassbar ist
   und/oder
ein Stabilisatorabschnitt zumindest abschnittsweise den Messkörper bildet, indem der Stabilisatorabschnitt mittels der Senderspule magnetisierbar ist und das vom Stabilisatorabschnitt erzeugte Magnetfeld mittels der zumindest einen Empfängerspule erfassbar ist.

Demnach wurde zunächst als vorteilhaft erachtet, dass sich mittels einer nach dem Prinzip der inversen Magnetostriktion arbeitenden Sensoreinrichtung das zwischen den Stabilisatorabschnitten wirkenden Drehmoment auf vorteilhafte Weise berührungslos - und somit verschleißfrei - erfassen lässt. Zur Vermeidung der zuvor genannten Nachteile ist beim erfindungsgemäßen Wankstabilisator die Sensoreinrichtung mit einer Senderspule versehen, mit der sich ein im Betrieb auf Torsion beanspruchter Messkörper - beispielsweise ein Gehäuseabschnitt eines zwischen den Stabilisatorabschnitten angeordneten Aktuators oder ein Endbereich eines Stabilisatorabschnitts - magnetisieren lässt. Dieser ist dazu zweckmäßigerweise aus einem magnetisierbaren Material hergestellt. Daneben weist erfindungsgemäß die Sensoreinrichtung wenigstens eine Empfängerspule auf, mit der sich das aktiv im Messkörper erzeugte Magnetfeld erfassen lässt. Gemäß dem Prinzip der inversen Magnetostriktion verursacht eine mechanische Beanspruchung des Messkörpers eine Veränderung des Magnetfeldes des Messkörpers, welche wiederum durch die wenigstens eine Empfängerspule erfassbar ist. Die erfindungsgemäß vorgesehene aktive Magnetisierung des Messkörpers bietet den Vorteil, dass eine aufwendige (permanente) Vormagnetisierung des Messkörpers entfällt. Da die Magnetisierung durch die Senderspule aktiv vorgenommen wird und damit jeweils nur temporär besteht, unterliegt diese in geringerem Maße äußeren Einflüssen, insbesondere tritt keine zeitliche und/oder durch mechanische bzw. thermische Einflüsse verursachte Abschwächung auf. Die zuvor genannte Aufgabe wird damit gelöst. Unterschiedliche konstruktive Ausgestaltungen sind denkbar.

Grundsätzlich sei angemerkt, dass es sich bei dem Messkörper um ein im Betrieb des Wankstabilisators auf Torsion beanspruchtes Bauteil handelt. Dies kann beispielsweise ein Teil des Gehäuses des Aktuators - im Fall eines verstellbaren Wankstabilisators - sein. Der Messkörper kann aber auch ein Teil eines Stabilisatorabschnitts sein, der ein Drehmoment zwischen den Radaufhängungen des Kraftfahrzeugs austauscht, um Wankbewegungen auszugleichen.

Erfindungsgemäß weist die Sensoreinrichtung wenigstens eine Empfängerspule auf. Diese dient zum Erfassen des Magnetfeldes des Messkörpers. Außerdem umfasst die Sensoreinrichtung eine Senderspule zum Erzeugen des Magnetfeldes, so dass der Messkörper nur bei Bestromung der Senderspule temporär berührungslos magnetisierbar ist. Wenn die Senderspule kurzzeitig bestromt wird, kann Energie eingespart werden. Daneben wird durch das temporäre Magnetisieren eine permanente Magnetisierung verhindert, wodurch wiederum eine Verfälschung von Messergebnissen reduziert werden kann. Die Senderspule kann wahlweise mit Gleichstrom oder mit Wechselstrom beaufschlagt werden. Durch Gleichstrom bildet sich ein konstantes Magnetfeld, welches die Messauswertung vereinfacht. Eine Beaufschlagung mit Wechselstrom kann verhindern, dass sich der Messkörper mit der Zeit magnetisiert und die Magnetisierung auch dann beibehält, wenn keine Messung durchgeführt wird.

Weiterhin ist es von Vorteil, wenn die Sensoreinrichtung eine mit der Senderspule und der wenigstens einen Empfängerspule elektrisch verbundene Steuereinheit umfasst. Die Steuereinheit kann so beispielsweise die Senderspule ansteuern. Zweckmäßigerweise empfängt die Steuereinheit von der Empfängerspule ein Messsignal, das Informationen über das Magnetfeld enthält. Daraus kann die Steuereinheit die Torsion des Messkörpers berechnen.

In vorteilhafter Weise ist die Steuereinheit derart ausgebildet, dass mittels dieser zur temporären Erzeugen des Magnetfeldes die Senderspule während eines Zeitfensters bestrombar ist. Die Steuereinheit kann zu diesem Zweck eine Stromquelle aufweisen, die den Strom für die Senderspule liefern kann. Zusätzlich oder alternativ kann die Steuereinheit auch eine externe Stromquelle ansteuern, die der Senderspule Strom liefert. Das Zeitfenster kann beispielsweise im Bereich von einigen Millisekunden liegen. Die Senderspule erzeugt in diesem Fall ein Magnetfeld für einige Millisekunden.

Zusätzlich oder alternativ kann die Steuereinheit auch derart ausgebildet sein, dass mittels dieser innerhalb dieses Zeitfensters ein Signal der wenigstens einen Empfängerspule empfangbar ist. Wenn die Empfängerspule ebenfalls für einige Millisekunden das Magnetfeld misst, kann auf diese Weise die Torsion in einer ausreichenden Zeitauflösung gemessen werden. Des Weiteren kann die Steuereinheit derart ausgebildet sein, dass diese für das Zeitfenster die Senderspule bestromt und/oder dass diese mittels der wenigstens einen Empfängerspule das Magnetfeld messen kann. Die Steuereinheit kann ferner nach dem Zeitfenster für eine Ruhephase die Senderspule nicht mit Strom beaufschlagen. Dadurch kann die permanente Magnetisierung des Messkörpers verhindert werden.

Zweckmäßigerweise ist die Steuereinheit betreibbar, anhand von Signalen wenigstens einer Empfängerspule aus einer durch mechanische Belastung verursachten Biegung und/oder Torsion des Messkörpers ein zwischen den Stabilisatorabschnitten wirkendes Drehmoment abzuleiten.

Die Erfindung ist aufgrund des Bedarfs einer Regelung besonders für aktiv verstellbare Wankstabilisatoren vorteilhaft, um das innerhalb des Stabilisators wirkende Drehmoment in die Regelung einfließen zu lassen. Daher ist erfindungsgemäß der Wankstabilisator aktiv verstellbar ausgeführt, wozu dieser einen zwischen den Stabilisatorabschnitten wirkenden Aktuator mit vorzugsweise elektromechanischem Antrieb aufweist, der zur Verdrehung der Stabilisatorabschnitte gegeneinander mit jedem der Stabilisatorabschnitte antriebsverbunden ist.

Erfindungsgemäß weist dessen Aktuator ein Gehäuse auf, innerhalb dessen ein Antriebsmotor und ein damit antriebsverbundenes Getriebe, insbesondere mehrstufiges Planetengetriebe angeordnet ist.

Eine erfindungsgemäße Gestaltung ergibt sich, wenn das Gehäuse des Aktuators zumindest abschnittsweise den Messkörper bildet, indem das Gehäuse mittels der Senderspule magnetisierbar ist und das vom Gehäuse erzeugte Magnetfeld mittels der wenigstens einen Empfängerspule erfassbar ist. In diesem Fall kommt dem Gehäuse des Aktuators eine zusätzliche Funktion zu, indem dieses als mechanisch beanspruchtes Bauteil zum Teil der Sensoreinrichtung (Messkörper) wird.

Alternativ oder ergänzend kann erfindungsgemäß ein Stabilisatorabschnitt zumindest abschnittsweise den Messkörper bilden, indem der Stabilisatorabschnitt mittels der Senderspule magnetisierbar ist und das vom Stabilisatorabschnitt erzeugte Magnetfeld mittels der zumindest einen Empfängerspule erfassbar ist. In diesem Fall kommt dem Stabilisatorabschnitt eine zusätzliche Funktion zu, indem dieses als mechanisch beanspruchtes Bauteil zum Teil der Sensoreinrichtung (Messkörper) wird.

Die Erfindung wird nachfolgend anhand von Zeichnungen näher erläutert. Daraus gehen auch weitere Merkmale und vorteilhafte Wirkungen der Erfindung hervor. In der Zeichnung zeigt:
- Fig. 1: einen verstellbaren Wankstabilisator eines Kraftfahrzeugs in schematischer Ansicht,
- Fig. 2: einen schematisch vereinfacht dargestellten Wankstabilisator mit Messung innerhalb des Aktuatorgehäuses gemäß einem Ausführungsbeispiel der Erfindung,
- Fig. 3: eine schematisch vereinfachte Darstellung einer Sensoreinheit in Draufsicht auf ein Aktuatorgehäuse,
- Fig. 4: eine schematisch vereinfachte Darstellung einer Sensoreinheit im axialen Schnitt durch ein Aktuatorgehäuse,
- Fig. 5: einen schematisch vereinfacht dargestellten Wankstabilisator mit Messung innerhalb des Stabilisatorabschnitts gemäß einem Ausführungsbeispiel der Erfindung,
- Fig. 6: einen schematisch vereinfacht dargestellten Wankstabilisator mit Messung außerhalb des Stabilisatorabschnitts gemäß einem Ausführungsbeispiel der Erfindung,
- Fig. 7: einen schematisch vereinfacht dargestellten Wankstabilisator mit Messung außerhalb des Aktuatorgehäuses gemäß einem Ausführungsbeispiel der Erfindung.

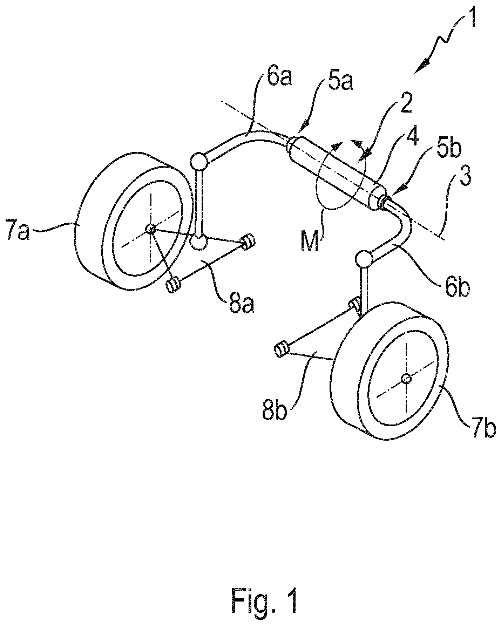

Zur Veranschaulichung des Einsatzgebietes der Erfindung zeigt Figur 1 zunächst einen verstellbaren Wankstabilisator 1 für ein Kraftfahrzeug in vereinfacht schematischer, perspektivischer Ansicht. Der verstellbare Wankstabilisator 1 ist Teil eines nicht vollständig gezeigten Fahrwerks eines (nicht dargestellten) Kraftfahrzeugs. Ein erstes Rad 7a und ein auf der gegenüberliegenden Fahrzeugseite angeordnetes zweites Rad 7b sind jeweils über eine Radaufhängung 8a beziehungsweise 8b (vereinfacht dargestellt) mit dem Aufbau des Kraftfahrzeugs verbunden. Rad 7a und Radaufhängung 8a beziehungsweise Rad 7b und Radaufhängung 8b sind jeweils mit einem äußeren Ende eines zugehörigen Stabilisatorabschnitts 6a beziehungsweise 6b des verstellbaren Wankstabilisators 1 gekoppelt. Die beiden Stabilisatorabschnitte 6a und 6b sind fahrzeugmittig über einen Aktuator 2 miteinander verbunden.

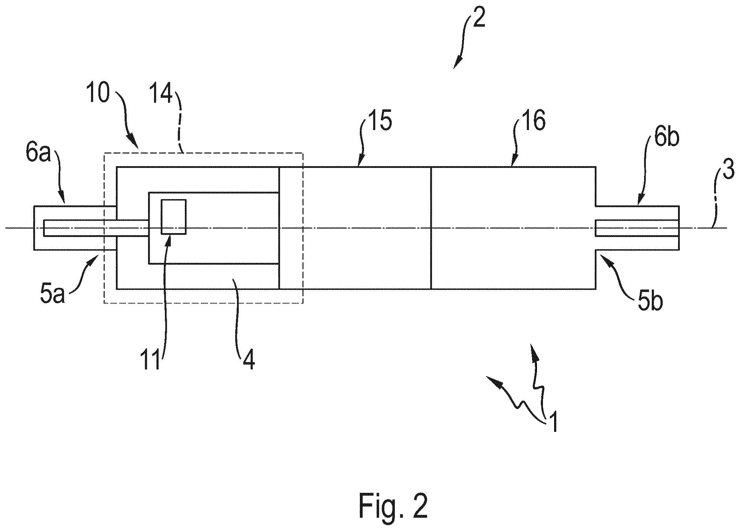

Auf für sich gesehen bekannte Weise ist der verstellbare Wankstabilisator 1 um eine Rotationsachse 3 drehbar gegenüber dem Fahrzeugaufbau gelagert (Lagerung nicht näher dargestellt). Der Aktuator 2, hier vereinfacht als zylindrischer Körper dargestellt, umfasst im Wesentlichen ein in Bezug auf die Rotationsachse 3 im Wesentlichen rotationssymmetrisches Aktuatorgehäuse 4, in welchem ein elektrischer Motor 15 sowie ein mehrstufiges Planetengetriebe (beide in dieser Darstellung nicht eingezeichnet, vgl. jedoch Fig. 2, 5, 6 und 7) angeordnet sind. Über den elektrischen Motor und das mehrstufige Planetengetriebe stehen die Stabilisatorabschnitte 6a und 6b in Antriebsverbindung zueinander. Bei stehendem elektrischen Motor sind die beiden Stabilisatorabschnitte 6a, 6b über den Aktuator 2 starr miteinander verbunden. Durch Betrieb des Elektromotors lassen sich die Stabilisatorabschnitt 6a, 6b abhängig von der Drehrichtung um die Rotationsachse 3 gegeneinander verdrehen. So lässt sich der verstellbare Wankstabilisator 1 auf für sich gesehen bekannte Weise verstellen.

Gemäß der gezeigten schematischen Darstellung ist der Stabilisatorabschnitt 6a gehäusefest, das heißt dieser ist drehfest mit eine Ende 5a des Aktuatorgehäuses 4 verbunden. Hingegen ist der Stabilisatorabschnitt 6b mit dem Aktuator 2 an seinem abtriebsseitigen Ende 5b verbunden. Das heißt, der Stabilisatorabschnitt 6b ist drehbar gegenüber dem Aktuatorgehäuse 4 gelagert, jedoch antriebsverbunden mit dem Getriebeausgang des Aktuators 2. Abhängig vom Betriebszustand des Kraftfahrzeugs wirkt zwischen den Stabilisatorabschnitten 6a, 6b ein Drehmoment M, das in Figur 1 als um die Rotationsachse 3 wirkender Doppelpfeil eingezeichnet ist. Die Höhe und Richtung des Drehmoments M hängen ab vom Betriebszustand.

In den Figuren 2, 5, 6 und 7 sind hinsichtlich der Anordnung der Sensoreinrichtung vier Ausführungsbeispiele für erfindungsgemäße Wankstabilisatoren gemäß der Erfindung in deutlich vereinfachter Darstellung wiedergegeben. Zunächst sei auf die gemeinsamen Merkmale der dort gezeigten Wankstabilisatoren eingegangen:
Jeder der in den Figuren 2 sowie 5 bis 7 dargestellten Wankstabilisatoren 1 weist eine Sensoreinrichtung 10 auf, die nach dem Prinzip der inversen Magnetostriktion arbeitet. Aus Vereinfachungsgründen sind die Stabilisatorabschnitte 6a, 6b verkürzt und vereinfacht dargestellt als sich entlang der Rotationsachse 3 erstreckende Stummel. Der zwischen diesen befindliche Aktuator 2, der die Stabilisatorabschnitte 6a und 6b auf wie in Figur 1 vergleichbare Weise miteinander verbindet, weist einen elektrischen Motor 15 sowie ein koaxial dazu angeordnetes mehrstufiges Planetengetriebe 16 auf, die zusammen mit einer ECU 14 (Steuereinheit) innerhalb eines Aktuatorgehäuses 4 angeordnet sind. Wie bereits im Zusammenhang mit Figur 1 erläutert, ist der Stabilisatorabschnitt 6a jeweils fest mit dem Aktuatorgehäuse 4 verbunden, während der Stabilisatorabschnitt 6b drehbar gegenüber dem Aktuatorgehäuse 4 gelagert ist und drehfest mit dem Abtrieb des mehrstufigen Planetengetriebes 16 verbunden ist, um mittels des Aktuators 2 gegenüber dem Stabilisatorabschnitt 6a verdrehbar zu sein. Ein gehäusefestes Ende 5a des Aktuators ist also mit dem Stabilisatorabschnitt 6a verbunden, während am abtriebsseitigen Ende 5b des Aktuators der Stabilisatorabschnitt 6b drehbar gegenüber dem Aktuatorgehäuse 4 gelagert ist und in Antriebsverbindung mit dem mehrstufigen Planetengetriebe 16 und dem elektrischen Motor 15 steht.

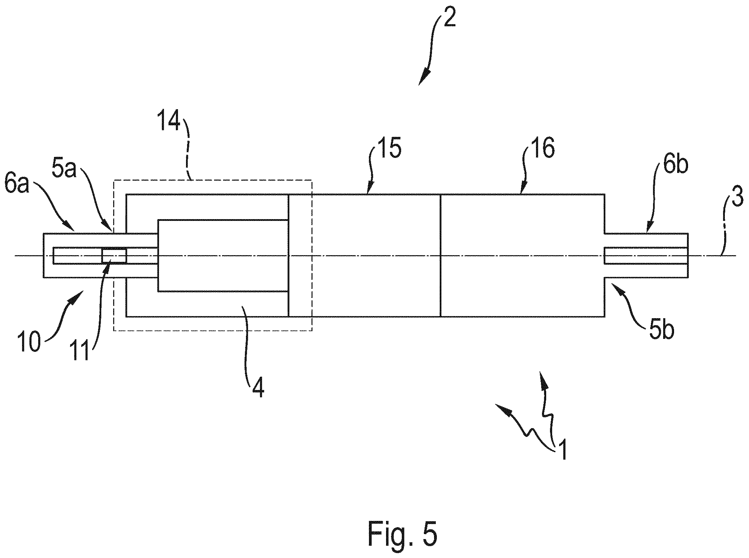

In den bisher zu Figur 2 gemachten Erläuterungen gleicht sich das in Figur 2 dargestellte Ausführungsbeispiel mit den in den Figuren 5, 6 und 7 dargestellten Ausführungsbeispielen. Zur Vermeidung von Wiederholungen sei daher nachfolgend nur noch auf unterscheidende Besonderheiten der einzelnen Ausführungsbeispiele eingegangen.:
Bei dem in Figur 2 dargestellten Wankstabilisator ist die Sensoreinrichtung 10 derart ausgeführt, dass eine die Senderspule und die wenigstens eine Empfängerspule aufnehmende Sensoreinheit 11 innerhalb des Aktuatorgehäuses 4 angeordnet ist, wobei das Aktuatorgehäuse 4 zugleich als Messkörper der Sensoreinrichtung 10 dient. Die Sensoreinheit 11 ist somit radial innerhalb des Messkörpers 4 (gleich Aktuatorgehäuse 4) angeordnet. Das Aktuatorgehäuse 4 ist mittels der an der Sensoreinheit 11 angeordneten Senderspule magnetisierbar und das vom Aktuatorgehäuse 4 erzeugte Magnetfeld ist mittels der wenigstens einen Empfängerspule auf der Sensoreinheit 11 erfassbar.

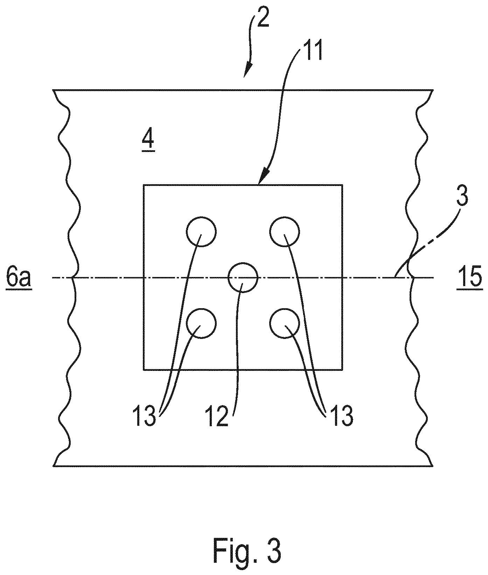

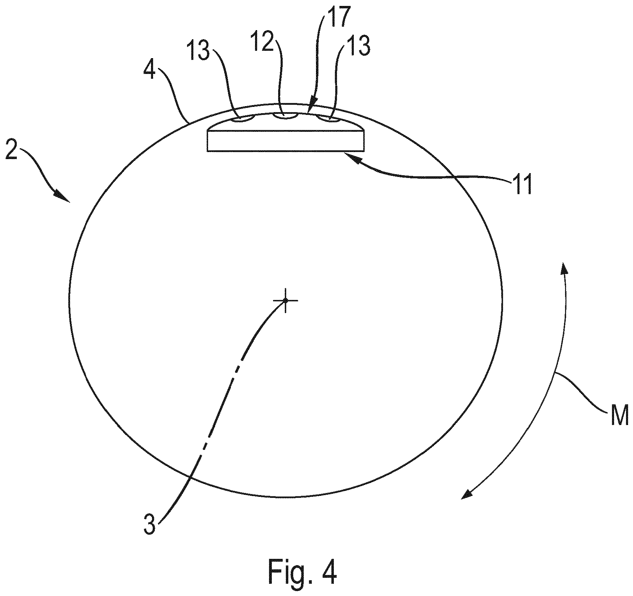

In den Figuren 3 und 4 ist schematisch der Aufbau beziehungsweise die Anordnung der dabei zum Einsatz kommenden Sensoreinheit 11 in unterschiedlichen Ansichten dargestellt.

Figur 3 zeigt die innerhalb des Aktuatorgehäuses 4 angeordnete Sensoreinheit 11 in Draufsicht in vereinfachter Darstellung. Die Sensoreinheit 11 befindet sich in Draufsicht etwa mittig über der Rotationsachse 3 des Aktuators 2, in einem Bereich zwischen Stabilisatorabschnitt 6a und elektrischem Motor 15. Eine Senderspule 12 sowie 4 Empfängerspulen 13 sind an der Sensoreinheit 11 als Baueinheit angeordnet. Dabei ist die Senderspule 12 jeweils zwischen einem Paar von Empfängerspulen 13 angeordnet, wobei die 4 Empfängerspulen 13 im Quadrat angeordnet sind, in dessen Zentrum die Senderspule 12 positioniert ist.

Gemäß Figur 4, welche die Sensoreinheit 11 innerhalb des Aktuatorgehäuses 4 des Aktuators 2 im axialen Schnitt entlang der Rotationsachse 3 zeigt, weist die Sensoreinheit 11 eine zur Innenseite des Messkörpers (gleich Aktuatorgehäuse 4) konvexe Oberfläche 17 auf. Die auf der Oberfläche 17 angeordneten Spulen 12, 13 weisen somit einen gleichen Abstand zum Aktuatorgehäuse 4 auf, wodurch für jede der Spulen eine gleichartige Wechselwirkung gegenüber dem hier als Messkörper dienenden Aktuatorgehäuse 4 besteht.

Die in den Figuren 5, 6 und 7 dargestellten Ausführungsbeispiele unterscheiden sich gegenüber dem anhand von Figur 2 beschriebenen Ausführungsbeispiel hinsichtlich der Anordnung der Sensoreinheit 11.

Gemäß dem in Figur 5 gezeigten Ausführungsbeispiel ist die Sensoreinheit 11 radial innerhalb des Stabilisatorabschnitts 6a angeordnet. Der Stabilisatorabschnitt 6a bildet hier - zumindest abschnittsweise - den Messkörper, indem der Stabilisatorabschnitt 6a mittels der Senderspule magnetisierbar ist und das vom Stabilisatorabschnitt 6a erzeugte Magnetfeld mittels der Empfängerspule(n) erfassbar ist.

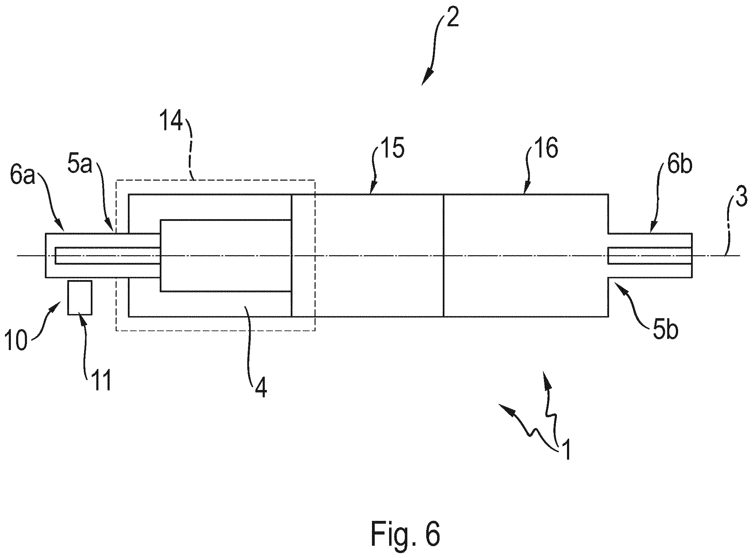

Gemäß dem in Figur 6 gezeigten Ausführungsbeispiel ist die Sensoreinheit 11 radial außerhalb des Stabilisatorabschnitts 6a angeordnet. Auch hier bildet der Stabilisatorabschnitt 6a - zumindest abschnittsweise - den Messkörper, indem der Stabilisatorabschnitt 6a mittels der Senderspule magnetisierbar ist und das vom Stabilisatorabschnitt 6a erzeugte Magnetfeld mittels der Empfängerspule(n) erfassbar ist.

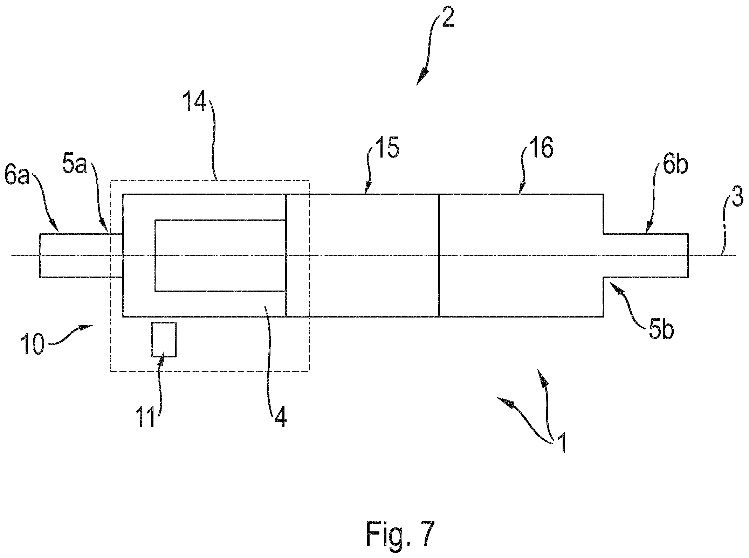

Gemäß dem in Figur 7 gezeigten Ausführungsbeispiel ist die Sensoreinheit 11 radial außerhalb des Aktuatorgehäuses 4 angeordnet, welches in diesem Fall wiederum den Messkörper bildet. Im Unterschied zu dem in Fig. 2 gezeigten Beispiel ist die Sensoreinheit 11 nun aber eben radial außerhalb des Aktuatorgehäuses 4 angeordnet. Eine solche Anordnung kann beispielsweise zweckmäßig sein, wenn innerhalb des Aktuatorgehäuses 4 kein ausreichender Bauraum zur Aufnahme der Sensoreinheit zur Verfügung steht.

### Bezugszeichen

- 1: Wankstabilisator
- 2: Aktuator
- 3: Rotationsachse
- 4: Aktuatorgehäuse
- 5a: gehäusefestes Ende des Aktuators
- 5b: abtriebsseitiges Ende des Aktuators
- 6a: Stabilisatorabschnitt (gehäusefest)
- 6b: Stabilisatorabschnitt (abtriebsseitig)
- 7a, 7b: Rad
- 8a, 8b: Radaufhängung
- 10: Sensoreinrichtung
- 11: Sensoreinheit
- 12: Senderspule
- 13: Empfängerspule
- 14: ECU
- 15: elektrischer Motor
- 16: mehrstufiges Planetengetriebe
- 17: Oberfläche

- M: Drehmoment

## Patentansprüche

1. Wankstabilisator (1) für ein Kraftfahrzeug, mit einer nach dem Prinzip der inversen Magnetostriktion arbeitenden Sensoreinrichtung (10) zur Erfassung eines zwischen Stabilisatorabschnitten (6a, 6b) wirkenden Drehmoments (M), wobei der Wankstabilisator (1) aktiv verstellbar ausgeführt ist und dazu einen zwischen den Stabilisatorabschnitten (6a, 6b) wirkenden Aktuator (2) aufweist, der zur Verdrehung der Stabilisatorabschnitte (6a, 6b) gegeneinander mit jedem der Stabilisatorabschnitte (6a, 6b) antriebsverbunden ist, wobei der Aktuator (2) ein Gehäuse (4) aufweist, innerhalb dessen ein Antriebsmotor (15) und ein damit antriebsverbundenes Getriebe angeordnet ist, wobei die Sensoreinrichtung (10) eine Senderspule (12) zur Magnetisierung eines im Betrieb auf Torsion beanspruchten Messkörpers (4; 6a) und wenigstens eine Empfängerspule (13) zum Erfassen des Magnetfeldes des Messkörpers (4; 6a) aufweist, **dadurch gekennzeichnet, dass**
das Gehäuse (4) des Aktuators (2) zumindest abschnittsweise den Messkörper bildet, indem das Aktuatorgehäuse (4) mittels der Senderspule (12) magnetisierbar ist und das vom Aktuatorgehäuse (4) erzeugte Magnetfeld mittels der wenigstens einen Empfängerspule (13) erfassbar ist
und/oder
ein Stabilisatorabschnitt (6a) zumindest abschnittsweise den Messkörper bildet, indem der Stabilisatorabschnitt (6a) mittels der Senderspule (12) magnetisierbar ist und das vom Stabilisatorabschnitt (6a) erzeugte Magnetfeld mittels der zumindest einen Empfängerspule (13) erfassbar ist.

2. Wankstabilisator nach Anspruch 1, **dadurch gekennzeichnet, dass** der Aktuator (2) einen elektromechanischen Antrieb (15, 16) aufweist.

3. Wankstabilisator nach Anspruch 2, **dadurch gekennzeichnet, dass** das Getriebe als mehrstufiges Planetengetriebe (16) ausgeführt ist.

## Claims

1. Roll stabilizer (1) for a motor vehicle, comprising a sensor device (10), which operates according to the principle of inverse magnetostriction, for detecting a torque (M) acting between stabilizer sections (6a, 6b), wherein the roll stabilizer (1) is of actively adjustable design and for this purpose has an actuator (2) which acts between the stabilizer sections (6a, 6b) and is drive-connected to each of the stabilizer sections (6a, 6b) in order to rotate the stabilizer sections (6a, 6b) with respect to each other, wherein the actuator (2) has a housing (4) within which a drive motor (15) and a gear mechanism drive-connected to it are arranged, wherein the sensor device (10) has a transmitter coil (12) for magnetizing a measurement body (4; 6a) subject to torsion during operation and has at least one receiver coil (13) for detecting the magnetic field of the measurement body (4; 6a), **characterized in that** the housing (4) of the actuator (2) forms the measurement body at least in sections by way of the actuator housing (4) being magnetizable by means of the transmitter coil (12) and the magnetic field generated by the actuator housing (4) being detectable by means of the at least one receiver coil (13), and/or a stabilizer section (6a) forms the measurement body at least in sections by way of the stabilizer section (6a) being magnetizable by means of the transmitter coil (12) and the magnetic field generated by the stabilizer portion (6a) being detectable by means of the at least one receiver coil (13).

2. Roll stabilizer according to Claim 1, **characterized in that** the actuator (2) has an electromechanical drive (15, 16).

3. Roll stabilizer according to Claim 2, **characterized in that** the gear mechanism is configured as a multi-stage planetary gear mechanism (16).

## Revendications

1. Barre antiroulis (1) pour un véhicule automobile, comprenant un dispositif capteur (10) fonctionnant selon le principe de la magnétostriction inversée pour détecter un couple (M) agissant entre des sections (6a, 6b) de la barre antiroulis, dans laquelle la barre antiroulis (1) est réalisée de manière activement réglable et présente à cet effet un actionneur (2) agissant entre les sections (6a, 6b) de la barre antiroulis et qui est relié en entraînement à chacune des sections (6a, 6b) de la barre antiroulis pour la torsion des sections (6a, 6b) de la barre antiroulis l'une par rapport à l'autre, dans laquelle l'actionneur (2) présente un carter (4) à l'intérieur duquel un moteur d'entraînement (15) et une boîte de vitesses reliée en entraînement à celui-ci sont disposés, dans laquelle le dispositif capteur (10) présente une bobine émettrice (12) pour l'aimantation d'un corps de mesure (4 ; 6a) soumis à une contrainte de torsion en cours de fonctionnement et au moins une bobine réceptrice (13) pour détecter le champ magnétique du corps de mesure (4 ; 6a),
**caractérisée en ce que** le carter (4) de l'actionneur (2) constitue au moins par endroits le corps de mesure **en ce que** le carter d'actionneur (4) peut être aimanté au moyen de la bobine émettrice (12), et le champ magnétique généré par le carter d'actionneur (4) peut être détecté au moyen de ladite au moins une bobine réceptrice (13), et/ou
une section (6a) de la barre antiroulis constitue au moins par endroits le corps de mesure **en ce que** la section (6a) de la barre antiroulis peut être aimantée au moyen de la bobine émettrice (12), et le champ magnétique généré par la section (6a) de la barre antiroulis peut être détecté au moyen de ladite au moins une bobine réceptrice (13).

2. Barre antiroulis selon la revendication 1, **caractérisée en ce que** l'actionneur (2) présente un entraînement électromécanique (15, 16).

3. Barre antiroulis selon la revendication 2, **caractérisée en ce que** la boîte de vitesses est réalisée sous forme d'engrenage planétaire multi-étagé (16).
